# EUROPEAN PATENT SPECIFICATION

(11) **EP 3 663 552 B1**
(45) Date of publication and mention of the grant of the patent: **13.04.2022**
(21) Application number: 19214299.0
(22) Date of filing: 06.12.2019
(51) Int. Cl.: F01N 3/20, F01N 5/02, F01N 5/04, F02G 5/02, F25B 9/00, F25B 11/00, F25B 13/00

(54) **METHOD AND SYSTEM FOR THERMAL MANAGEMENT OF AN AFTER TREATMENT SYSTEM OF AN INTERNAL COMBUSTION ENGINE**
VERFAHREN UND SYSTEM ZUR THERMISCHEN MANAGEMENT EINES NACHBEHANDLUNGSSYSTEMS EINER BRENNKRAFTMASCHINE
PROCÉDÉ ET SYSTÈME DE GESTION THERMIQUE D'UN SYSTÈME DE POST-TRAITEMENT D'UN MOTEUR À COMBUSTION INTERNE

(30) Priority: 07.12.2018 IT 201800010899
(43) Date of publication of application: 10.06.2020
(73) Proprietor: FPT Motorenforschung AG, 9320 Arbon (CH)
(72) Inventor: FESSLER, Harald, 9320 ARBON (CH); WACHTER, Ralph, 9320 ARBON (CH)
(74) Representative: Lovino, Paolo

(56) References cited:
- EP-A1- 2 463 491
- WO-A1-2008/135059
- WO-A1-2011/011019
- WO-A1-2012/024551
- DE-A1-102017 109 447

## Description

### Field of the invention

The present invention relates to a method and device for thermal management of an ATS (after treatment system) of a diesel internal combustion engine, in particular in the field of industrial vehicles.

### Description of the prior art

In the field of industrial vehicle, the implementation of the Brayton cycle is known to recuperate energy from the exhaust gas.

Thermal management of the ATS is one of the big challenges to fulfil future emission limits. Fast warm up and energy efficient temperature control are important.

The most sensitive ATS component to the temperature is the SCR (Selective catalytic reduction). The SCR needs to be operated above the so-called light-off temperature of 250°C. Indeed the hydrolyzation of the urea based agent leads to crystal formation at too low temperatures.

Current thermal management approach is to either control the air flow or worsening the fuel consumption to adjust the exhaust gas temperature and energy. Typical systems to control the air flow are inlet throttling, valve timing variation and uncooled EGR, while, conventional strategies to worsen fuel consumption to increase exhaust gas energy and temperature are late injection timings or post injection and/or exhaust throttling.

When the ATS reaches a temperature sufficient to treat pollutants produced by the internal combustion engine, a WHR (Waste heat recovery) system can be implemented to recover an excess of energy contained in the exhaust gas by producing electric energy or to supplement the internal combustion engine.

Several known cycles can be implemented in the WHR system. https://www.dieselnet.com/tech/engine_whr.php discloses table 2 with such cycles.

Rankine cycle is the most implemented circuit. It is a closed cycle, which usually implements water or ethanol as working medium.

*"*An investigation on the performance of a Brayton cycle waste heat recovery system for turbocharged diesel engines" Binyang Song, Weilin Zhuge, Journal of Mechanical Science and Technology June 2013, Volume 27, Issue 6, pp 1721-1729 discloses the implementation of a Brayton cycle as WHR. The Bryton cycle is an open cycle exchanging with the ambient the working medium.

WO2011/011019A1 discloses a solution in which a part of supercharging compressed air can by-pass the engine, thanks to a valve, so as to be mixed with exhaust gas flowing out from such engine. The mixing of the air into the exhaust gas takes place upstream of a catalytic converter and a turbine in order to adjust the temperature. Afterwards, the mixture of gas and air is discharged into the atmosphere.

### Summary of the invention

The main object of the present invention to improve the thermal management of the after treatment system ATS of an internal combustion engine.

The main principle of the invention is the implementation of turbo-machine to at least add thermal content to the exhaust gas according to the SCR temperature through a Brayton cycle.

A turbo-machine, as the well-known turbochargers, is an assembly including a compressor and a turbine coupled between each other through the opposite ends of a common shaft or interconnected electrically through inverters and a battery pack.

While in the known turbocharger schemes the compressor is implemented to supercharge the internal combustion engine, according to the present invention, the scope is to compress a gas such that to increase its temperature to help the exhaust gas temperature to lead the SCR to the above light-off temperature.

A turbocharger is defined as "compound" when it is suitable to receive or deliver energy to another entity such as mechanical energy to the internal combustion engine or electric energy to a battery pack. In this latter case, an "e-turbocharger" has as common shaft with the rotor of one single electric motor-generator. Thus, the opposite ends of the rotor are connected, in one end, with the compressor and, in the opposite end, with the turbine. Alternatively, two electric motor-generators are implemented, one operatively connected with the turbine and the other operatively connected with the compressor and the two motor-generators are coupled to a common electric network.

According to the present invention, the compressor and the turbine are arranged reciprocally in series, such that the same gas is compressed by the compressor of the turbomachine, then circulates through the turbine of the turbomachine. Finally, such gas is released to the environment.

Between the compressor and the turbine, the compressed working gas yields its thermal content to the exhaust gas produced by the internal combustion engine in a point upstream of the SCR, according to the circulation of the exhaust gas along with the exhaust line of the internal combustion engine.

According to a first embodiment of the invention, the gas circulated through the turbomachine is the same exhaust gas produced by the internal combustion engine.

According to a second embodiment of the invention, the gas circulated through the turbomachine is ambient air, namely fresh air.

The nature of the gas crossing the compressor is the same of the gas crossing the relative turbine. Thus, no fuel is injected in the circulated gas, both in case of fresh air sucked from the environment and in case of the same exhaust gas produced by the internal combustion engine.

The turbomachine adsorbs electric energy stored in electric storage means and/or mechanical/electrical energy from the engine crankshaft to compress the gas circulated therein, which release its thermal content in the exhaust gas. According to a preferred embodiment of the invention, the turbomachine is also capable to drain thermal energy from the exhaust gas when SCR (or TWC) is above the above light-off temperature. Thus, turbomachine drains electric and/or mechanical energy to compress fresh air, in a heat exchanger arranged on the ATS. The heat exchanger raises the fresh air temperature, which, in turn, reduces the exhaust gas temperature to stay within an optimum temperature range for the ATS.

According to a preferred embodiment of the invention, when the SCR temperature is over its light-off temperature, the turbomachine produces electric and/or mechanical energy from the exhaust gas energy content as a traditional WHR. The gas used as working medium, in this case, is preferably ambient air, because a higher delta temperature can be exploited.

For example, during warm up operation, the gas used by the turbo-machine can be fresh air, exhaust gas or a mixture of both, while, when the system works as a traditional WHR, fresh air is compressed, then heated by the hotter exhaust gas, then expanded at the turbine.

Advantageously, turbomachines, including e-turbocharger, are currently implemented to supercharge internal combustion engines, thus, such components are easily available on the market.

The proposed invention combines known technologies to achieve an effective ATS temperature control including waste heat recovery.

A first object of the present invention is a method for thermal management of an ATS of an internal combustion engine, according to claim 1.

A second object of the present invention is an ATS for an internal combustion engine, according to claim 7.

A further object of the present invention is an internal combustion engine in combination with said ATS.

The present invention can be applied both to diesel and gasoline engine.

Indeed, in diesel engine the more sensitive abatement device is the SCR, in the gasoline engines is the three-way-catalyst, usually indicated as TWC or 3WC.

These and further objects are achieved by means of the attached dependent claims, which describe preferred embodiments of the invention, forming an integral part of the present description.

### Brief description of the drawings

The invention will become fully clear from the following detailed description, given by way of a mere exemplifying and non-limiting example, to be read with reference to the attached drawing figures, wherein:
- Fig. 1 shows a first embodiment of the invention;
- Fig. 2 shows a slight variation of the embodiment of figure 1

- Fig. 3 shows a second embodiment of the invention;
- Fig.5 shows a third embodiment of the invention arranged to switch between the schemes disclosed in figure 1 and 3;

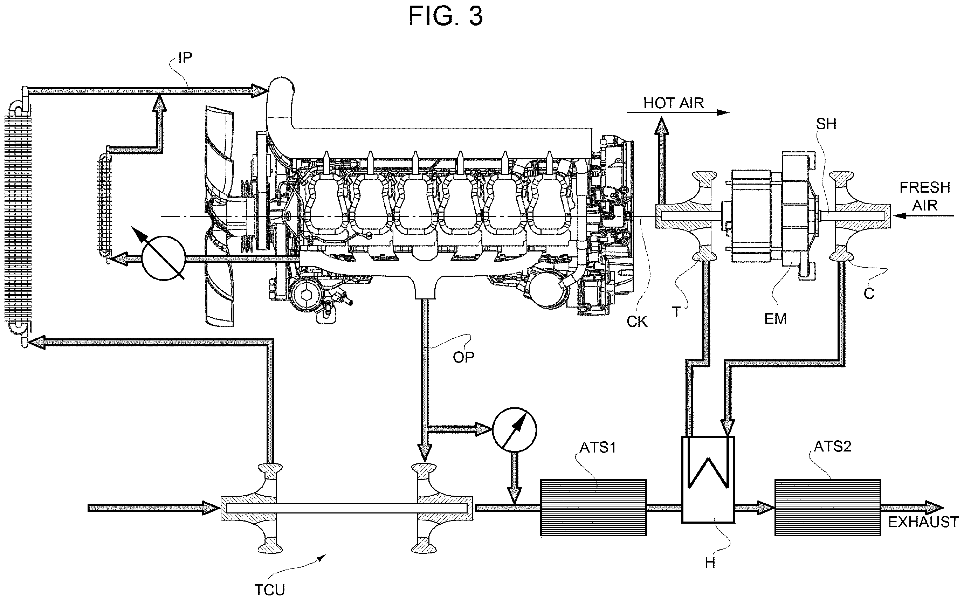

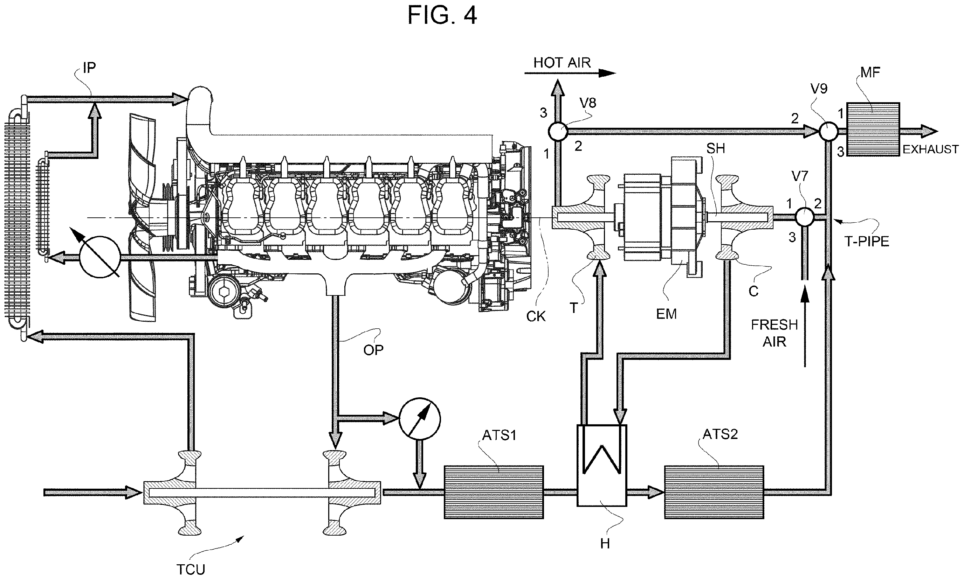

- Fig. 4 shows another embodiment of the invention fully based on the scheme of figure 3;

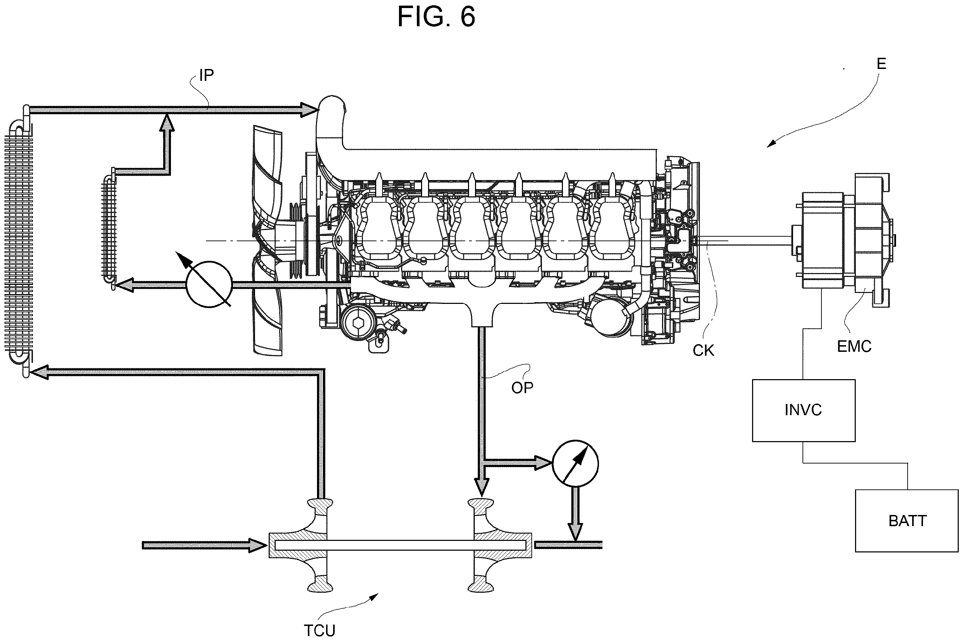

- Fig. 6 discloses a slightly different implementation of a component of the invention.

The same reference numerals and letters in the figures designate the same or functionally equivalent parts. According to the present invention, the term "second element" does not imply the presence of a "first element", first, second, etc.. are used only for improving the clarity of the description and they should not be interpreted in a limiting way.

### Detailed description of the preferred embodiments

Example embodiments are, now, provided so that this disclosure will be thorough, for those skilled in the art.

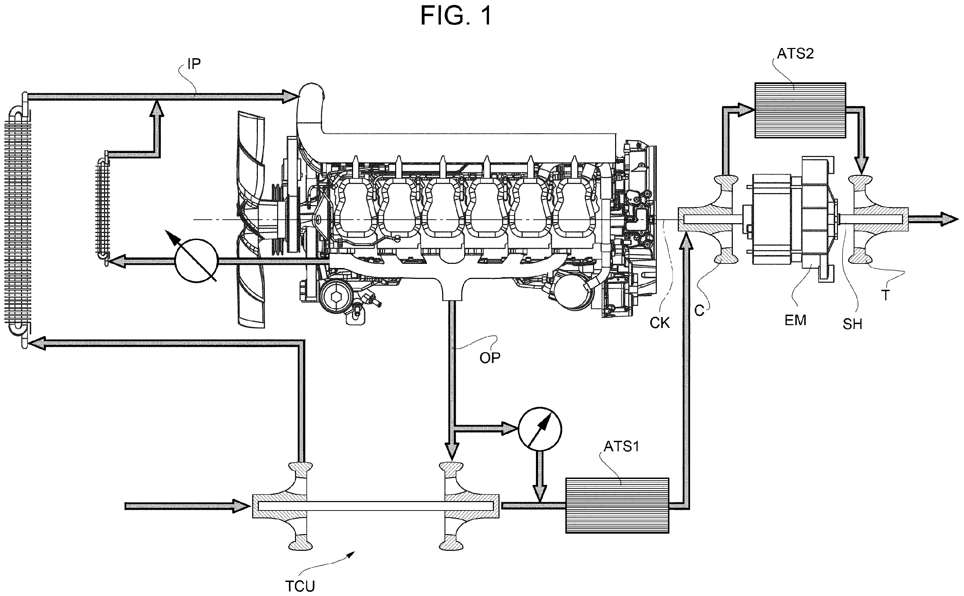

Figures 1 - 5 disclose an internal combustion engine E, preferably a diesel engine. Figure 6 discloses an embodiment in which the internal combustion engine crankshaft is operatively connected with an electric motor-generator EMC. The solution of figure 6 is a modification that can be combined with any of the solutions according to figures 1 - 5.

The engine E has an inlet line IP and an outlet line OP, such as the engine sucks fresh air from the environment through the inlet line and delivers exhaust gas in the environment through the outlet (or exhaust) line OP.

Along the outlet line, one or more abatement devices are arranged, and, only for example, they are grouped into two portions ATS1 and ATS2 of the after treatment system ATS. For example, for a diesel engine ATS1 can include a DOC (Diesel Oxidation Catalyst) and a DPF (Diesel Particulate Filter), while ATS2 can include a SCR (Selective Catalytic Reduction) and a dosing module arranged immediately upstream of the SCR to introduce a urea-based reducing agent, usually called with its commercial name AdBlue.

Downstream of ATS2 further components can be conceived, such as a CUC (Clean Up Catalyst) and a silencer MF. According to the present invention, the temperature of SCR is adjusted by implementing a turbomachine TC including a compressor C and a turbine T connected with the compressor, for example by means of a shaft SH or through electric means EM1, EM2, INV1, INV2, BATT, EMC, INVC, CK.
EM1 = motor-generator operatively associated with the turbine T,
EM2 = motor-generator operatively associated with the compressor C,
EMC = motor-generator operatively associated with the engine crankshaft,
INV1, INV2, INVC = inverters
BATT = battery pack, for example a lithium battery and/or a supercapacitor;
CK = internal combustion engine crankshaft.

In any case, preferably, the turbine is connected to the engine crankshaft and/or to an electric motor-generator EM1.

Along-with the figures 1 - 5 the turbine T or compressor C are disclosed aligned with the combustion engine crankshaft CK in order to suggest that the turbine can provide the crankshaft of mechanical energy and the compressor receive mechanical energy by the crankshaft. Nevertheless, compressor can receive electric energy generated by the crankshaft according to the scheme of figure 6. Alternatively, the turbine T and the compressor are mechanically connected to one single motor-generator EM1 in an e-turbocharger configuration or can be connected to two independent motor-generators EM1, EM2, while the engine crankshaft CK is connected to the further motor-generator EMC disclosed on figure 6.

In case of electrical connection between compressor and crankshaft the battery pack is not essential, because, the needed electric energy to drive the compressor can be supplied by the motor-generator EMC associated to the crankshaft.

Nevertheless, a battery pack BATT can be implemented to store electric energy and stabilize the voltage and to permit a certain independence between the combustion engine E and the TC assembly.

In particular, the compressor C is arranged to compress a working gas in order to adjust the temperature of ATS2.

It is known that the temperature of a gas, when compressed, increases. Therefore, the temperature increase is exploited to increase the exhaust gas temperature before entering into the ATS2, which needs thermal management.

According to a first embodiment of the invention, the working gas coincides with the exhaust gas, while according to a second embodiment of the invention, the working gas is fresh air sucked by the ambient.

Figure 1 represents an example of the first embodiment, while figure 3 represents an example of the second embodiment.

According to figure 1, the compressor C of the turbomachine is arranged on the outlet line to compress the exhaust gas directly within ATS2, such that while compressor C is just upstream of ATS2, the turbine T of the turbomachine is immediately downstream of ATS2.

The turbomachine TC receives mechanical energy directly from the combustion engine crankshaft CK, for example by means of a gearing or electric energy through the above motor-generator EMC to supply the electric motor EM included into the e-turbocharger assembly. In addition, the motor-generator EM is supplied with electric energy previously stored in battery pack BATT or, at the same time, generated by EMC. This is the reason for which a battery pack BATT can be omitted.

It is clear that both the internal combustion engine and the electric storage means, including BATT and EMC, are suitable to supply electric energy to the turbomachine, suitable to compress the working gas.

The crankshaft, the battery and the electric generator EMC associated to the crankshaft can be generically labelled as "energy storage means", in the sense that they are suitable to supply energy to the turbocharger/e-turbocharger.

The compression of the exhaust gas directly within ATS increases the residence time of the exhaust gas flow within the SCR. This permits to reduce the volume of the SCR and thus the metallic mass to be heated at engine cold start, thus during SCR warm up.

This embodiment appears to be particularly advantageous at engine cold start to rapidly increase the temperature of ATS2. However, it does not permit to extract energy from the exhaust gas when the latter includes an excess of thermal content.

It is known that SCR efficiency falls down when the gas temperature exceeds 350°C because its storage capacity of the reducing agent falls down.

According to figure 3, the working gas is fresh air sucked from the environment. A heat exchanger H, of the gas/gas-type is implemented immediately upstream of ATS2.

At cold start, the fresh air is compressed such that to reach at least 270 - 280°C to heat the exhaust gas before crossing ATS2.

It is clear that, this scheme is less efficient with respect to the scheme of figure 1, during cold start due to the, on average, lower temperature of the fresh air in comparison with the exhaust gas. However, when ATS2 temperature is well above the light-off temperature of the abatement device included in ATS2, the working gas, namely fresh air, can be exploited to extract the excess of energy from the exhaust gas. In this context, the turbomachine generates energy, mechanical when it is mechanically and directly coupled with the engine crankshaft CK, or electrical when the turbomachine is coupled with the EM. Such electric energy can be stored in a battery pack or exploited to supplement the internal combustion engine through the electric motor-generator EMC of figure 6, directly coupled with its crankshaft.

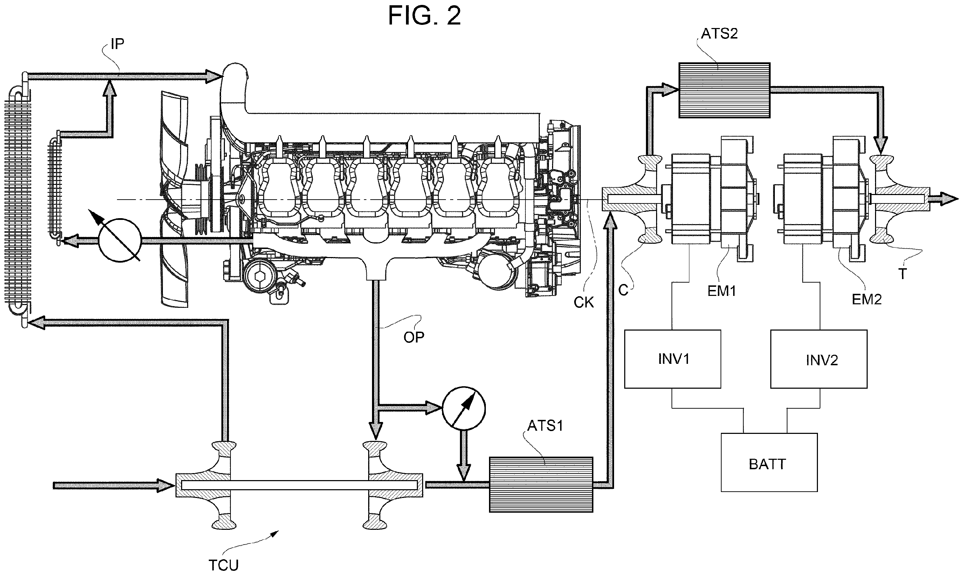

Figure 2 discloses a slight modification of the embodiment of figure 1. In particular, while on figure 1 the compressor C is mechanically connected with the turbine through the shaft SH, here, on figure 2, the turbo-machine includes
- a compressor C operatively driven by the first electric motor EM1 and/or the engine crankshaft and
- a turbine T operatively coupled with a second electric machine EM2,
and the shafts of the compressor and turbine are reciprocally independent to each other.

In this way, the compressor is activated only during ATS warm up, namely when the ATS temperature is below a first temperature threshold, while, when the ATS exceeds a second temperature threshold, higher or equal to the first one, the compressor is stopped. The turbine T works always as a common power turbine, to generate electric energy.

In this case, each of the electric machines EM1 and EM2 are connected to the battery pack BATT through a respective inverter INV1, INV2, which controls the energy drained from or provided to the battery pack or from the motor-generator EMC.

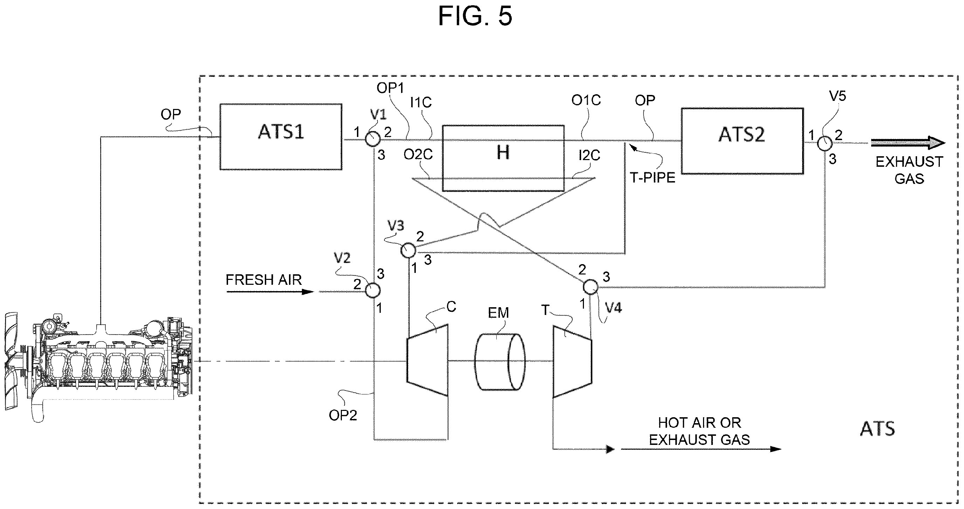

Figure 5 discloses a solution, which merges the benefits from both the schemes of figures 1 and 3.

Here, it is assumed that the turbomachine includes a turbine and a compressor mechanically interconnected to each other through the shaft SH.

According to figure 5, the outlet line OP is split into the branches OP1 and OP2, which are alternatively operative. The ATS1 is arranged on OP having the inlet arranged to receive exhaust gas produced by the internal combustion engine.

A first three-way valve V1 has a first port 1 connected with the outlet of ATS1 while the other two ports identify two branches OP1 and OP2 selectively activated. Such braches are respectively connected with the second port 2 and third port 3 of the first three-way valve V1.

As known the heat exchanger includes two circuits, thus two inlets and two outlets.

The heat exchanger H has the inlet I1C of the first circuit connected with the second port 2 of V1.

A second three-way valve V2 has a first port 1 connected with the third port of V1, has a second port 2 connected with the environment to suck fresh air and has third port 3 connected with the inlet of the compressor C.

A third three-way valve V3 has a first port 1 connected with outlet of the compressor, a second port 2 connected with the inlet I2C of the second circuit of the heat exchanger and a third port 3 connected with a port of a T-pipe. Another port of the T-pipe is connected with the outlet O1C of the first circuit of the heat exchanger H, and the last port of the T-pipe is connected with the inlet of ATS2.

A fourth valve V4 has a first port 1 connected with the inlet of the turbine T, a second port 2 connected with the outlet O2C of the second circuit of the heat exchanger and a third port 3 connected with the third port 3 of a fifth three-way valve V5.

This fifth three-way valve V5 has a first port 1 connected with the outlet of ATS2 and a second port 2 connected with the environment to release exhaust gas produced by the internal combustion engine.

The turbine T has the outlet connected with the environment to release exhaust gas produced by the internal combustion engine during cold start or hot fresh air after light-off of ATS2.

It is clear that downstream of the second port 2 of V5 and the outlet of the turbine further ATS component can be arranged, such as a CUC and a silencer. In order to convey such outlets into one common bottoming single line, a further 3-way valve should be arranged, having first port 1 connected with such common bottoming single line and the second and third port respectively connected with second port of V5 and the outlet of the turbine T.

According to the present scheme, each 3-way valve is arranged to selectively connect port 1 with port 2 or port 3. Connection between port 2 and 3 is not permitted.

For convenience, V1_12 is indicated as the operative condition in which port 1 is connected with port 2 of first 3-way valve V1, while V1_13 is indicated as the operative connection of port 1 with port 3 of first 3-way valve V1. Thus, respectively, ports 3 and 2 are closed/isolated.

The scheme of figure 1 is achieved when V1_13, V2_13, V3_13, V4_13, V5_13.

The scheme of figure 3 is achieved when V1_12, V5_12, V2_23, V3_23, V4_12.

This embodiment permits, with the first operative configuration, to compress exhaust gas directly within ATS2 during SCR warm up operation and, with the second operative configuration, to exploit a Bryton cycle with fresh air when the SCR temperature exceeds 300 - 350°C.

Let's summarize figure 5: there are two gas flow circulation options:
5a) [WHR mode] V2 (connects 1-2) fresh air is used, V1 (connects 1-2), V3 (connects 1-2), V4 (connects 1-2), V5 (connects 1-2);
5b) [Warm up mode] V2 (connects 1-3) picks exhaust gas after ATS1, V1 (connects 1-3), V3 (connects 1-3) sends hot gas under pressure to ATS2, V5 (connects 1-3), V4 (connects 1-3) and expands the gas within the turbine to recover some energy, then, gas might be rooted to the muffle MF.

According to the configuration 5b), partial opening of V2 can be conceived to introduce fresh air and adjust temperature, however, this option is conceived only for those ATS capable to ward with lambda >>1.

It should be noted that with configuration 5b, the heat exchanger H is completely excluded from the gas flow circuit during warm up operation of ATS2, while it is reintroduced in the gas flow circuit for heat recovery according to configuration 5a.

According to configuration 5a, the fresh air sucked from environment permits a larger temperature difference (Delta-T) with the exhaust gas temperature, thus increasing the efficiency of the energy recuperation.

According to a preferred implementation of this embodiment, during warm up (5b), the energy consumed to compress the exhaust gas is delivered by the combustion engine crankshaft.

This load increase, leads to a higher fuel injection within the engine cylinder to compensate the load increase generated by the turbomachine, which converts said load increase into thermal content in a way surely less dissipative than the common flaps.

When the turbomachine works as a WHR (waste heat recovery) unit, the energy recovered is preferably stored as electric energy, particularly useful when the vehicle is hybrid.

Therefore, the present invention, not only leads to speed up SCR warm up operation, but also to recharge propulsion batteries or drives directly the crankshaft with EMC.

Figure 4 discloses a second way to implement alternatively exhaust gas or fresh air as working gas. However, this scheme is fully based on figure 3. Thus, while according to figure 5, the heat exchanger is excluded or reintroduced when needed, according to the present scheme it remains always within the gas flow circuit, leading to a less complicate piping connection.

Here, during warm up, exhaust gas is compressed within the heat exchanger, thus it is not possible to achieve the effect of increasing the residence time of the exhaust gas flow within the SCR.

According to figure 4, ATS1, the heat exchanger H and ATS2 are, in series, connected to each other along the outlet line OP.

A seventh 3-way valve V7 has a first port 1 connected with the inlet of the compressor C, a third port 3 connected with the environment to suck fresh ambient air, a second port 2 connected with a first end of a T-pipe.

A second end of the T-pipe is connected with the outlet of ATS2, while a third end of the T-pipe is connected with a third port of a ninth 3-way valve V9.

A first port 1 of the ninth 3-way valve V9 is connected with a common bottoming single line where a CUC and/or a silencer MF is arranged. A second port 2 of the ninth 3-way valve V9 is connected with a second port 2 of an eight 3-way valve V8. The first port 1 of the eighth 3-way valve V8 is connected with the outlet of the turbine T of the turbomachine, while the third port 3 is connected with the environment to release hot air.

According to a first warm up operative configuration V7_12, V8_12, V9_12, while according to a WHR configuration V7_13, V8_13, V9_13.

When the warm up operative configuration is activated, the exhaust gas withdrawn at the outlet of the ATS or at least at the outlet of ATS2, is compressed into the heat exchanger, then directed to the turbine T.

When the SCR temperature is well before light-off temperature, for example 300-350°C, the valves are switched into said WHR configuration, so fresh air is circulated through the turbomachine and the heat exchanger H.

Let summarize figure 4: two gas flow circulation options:
4a) [WHR mode] V7 (connects 3-1) fresh air is used, V8 (connects 1-3), V9 (connects 3-1);
4b) [Warm up mode] V7 (connects 2-1) picks exhaust gas after ATS2, V8 (connects 1-2), V9 (connects 2-1).

The configuration 4b is different from figure 1 due to the use of heat exchanger H during warm up.

It should be understood that all the consideration about the scheme of figure 5 apply to figure 4.

In addition, the ninth 3-way valve V9 can be applied to the scheme of figure 5 with its port 2 connected with port 2 of fifth valve V5 and its port 3 connected with the outlet of turbine T, such that the exhaust gas and/or hot aid are conveyed in the CUC and/or muffler MF. Hence, port 1 of V9 would be connected to the turbine outlet so as
- V9_12 (heat recovery) air is exhausted in the ambient through MF or
- V9_13 (warmup mode) exhaust gas is rooted back through the heat exchanger H, and after passing the turbine, released in the ambient through MF.

Preferably, according to any of the previous embodiments, the turbine T has a variable geometry, or is provided with a waste-gate valve in order to adjust the energy recovered at the turbine.

According to figures 1 - 4, also a turbocharger unit TCU is disclosed arranged in a "common" way. It includes a turbine arranged on the outlet pipe upstream of ATS1 and a compressor driven by the turbine to compress fresh air to be introduced into the inlet pipe of the internal combustion engine. Figure 5 does not disclose such turbocharger TCU, only for convenience, thus such turbocharger unit can be present.

Therefore, according to the present invention, the thermal management of the SCR is carried out by the method of claim 1.

Usually, several temperature sensors are arranged along with the ATS, even if such temperature sensors are not disclosed in the figures.

When the exhaust gas is directly compressed into the SCR, as in figures 1, 2, and 5, as working gas, an increase of space velocity, namely a residence time of the exhaust gas flow within said at least one pollutants abatement device, is achieved. However, the exhaust gas to be compressed can be withdrawn upstream or also downstream of the SCR.

The switching of the 3-way valves can be controlled by the same control unit ECU implemented to control the internal combustion engine operation.

According to any of the embodiments disclosed, the turbomachine and the crankshaft CK of the internal combustion engine E can be connected by means of a suitable clutch and the turbomachine speed can be adapted with the crankshaft speed by means a suitable gearing including just two ports: an input and an output port.

Preferably, the first temperature threshold coincides with the above light-off temperature, while the second temperature threshold can be equal to or higher than the first temperature threshold.

The schemes of figures 4 and figure 5 permit to mix the alternative use of exhaust gas and fresh air, on the one side, to assure an optimal thermal management of the ATS and, on the other side, to improve the efficiency of the waste heat recuperation. Numerous specific details are set forth such as examples of specific components, devices, and methods, to provide a thorough understanding of embodiments of the present disclosure. It will be apparent to those skilled in the art that specific details need not be employed, that embodiments may be embodied in many different forms and that neither should be construed to limit the scope of the invention.

This invention can be implemented advantageously in a computer program comprising program code means for performing one or more steps of such method, when such program is run on a computer.

Many changes, modifications, variations and other uses and applications of the subject invention will become apparent to those skilled in the art after considering the specification and the accompanying drawings which disclose preferred embodiments thereof as described in the appended claims.

The features disclosed as prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. Method for thermal management of an after treatment system (ATS) of an internal combustion engine, the ATS including at least one pollutants abatement device, such as DOC, DPF, SCR, CUC, TWC, the method comprising a preliminary step of checking whether an ATS temperature is below a first predetermined threshold, the method comprising the following steps, which are carried out if the ATS temperature is below the first predetermined threshold:
- a first step of heating a working gas by compression, by means of a compressor (C), the working gas being defined by fresh air sucked from the environment or by an exhaust gas produced by the internal combustion engine;
- a second step of adjusting a temperature of said pollutants abatement device by the compressed and heated working gas flowing:
a) into a heat exchanger (H) arranged immediately upstream of the pollutants abatement device (ATS2), or
b) directly into the pollutants abatement device (ATS2), wherein the working gas is exhaust gas;
- a third step of circulating said working gas through a turbine (T) to drain residual energy, so that the nature of the working gas flowing through the compressor (C) is the same as the one of the working gas flowing through the turbine (T), thereby no fuel is injected in the circulated working gas;
- a fourth step of releasing said working gas in the environment;
wherein a first energy amount consumed in said first step is higher than a second energy amount recovered with said third step.

2. Method according to claim 1, wherein said working gas coincides with exhaust gas, withdrawn at a point upstream of said pollutants abatement device; wherein the compressed exhaust gas flows within said pollutants abatement device and then is circulated through said turbine, which is arranged downstream of said pollutants abatement device, so as to achieve an increased residence time of the exhaust gas flow within said pollutants abatement device.

3. Method according to claim 1, wherein said working gas coincides with recirculated exhaust gas, withdrawn at a point downstream of said pollutants abatement device, and wherein the recirculated and compressed exhaust gas flows within said heat exchanger (H), so as to achieve a thermal exchange in said heat exchanger (H) between said recirculated exhaust gas and an exhaust gas flow for leading to said temperature adjustment.

4. Method according to claim 1, wherein said working gas is defined by fresh air; wherein the compressed fresh air flows within said heat exchanger (H) so as to heat up an exhaust gas flow before the latter enters into said pollutants abatement device.

5. Method according to claim 4, wherein the method comprises the following steps, which are carried out when said ATS temperature (Tm) exceeds a second temperature threshold, higher than or coinciding with said first temperature threshold:
- a fifth step of compressing a working gas by means of said compressor (C),
- a sixth step of cooling exhaust gas generated by said internal combustion engine before the exhaust gas crosses said pollutants abatement device by said compressed working gas flowing into said heat exchanger (H),
- a seventh step of circulating said working gas through a turbine (T) to recover energy,
- an eighth step of releasing said working gas in the environment,
wherein a first energy amount consumed in said fifth step is lower than a second energy amount recovered with said seventh step.

6. Method according to claim 2, wherein the method comprises the following steps, carried out when said ATS temperature (Tm) exceeds a second temperature threshold, higher than or coinciding with said first temperature threshold:
- a seventh step of circulating said working gas through said turbine (T) to recover energy,
- a eighth step of releasing said working gas in the environment,
while said compressor is maintained inactive.

7. After treatment system (ATS) intended to treat exhaust gas produced by an internal combustion engine and including at least one pollutants abatement device, such as DOC, DPF, SCR, CUC, TWC, and comprising a system for thermal management of the pollutants abatement device; the system comprising:
- a control unit configured to carry out the method steps according to claims 1 to 6,
- a turbomachine assembly (TC) including
. a compressor (C) arranged to heat by compression a working gas and to increase a temperature of said pollutants abatement device (ATS2) by means of compressed working gas, the working gas being defined by fresh air or by an exhaust gas produced by the internal combustion engine;
. a turbine (T) mechanically connected or electrically connectable with said compressor, respectively through mechanical connecting means (SH) or electric connecting means (EM1, EM2, INV1, INV2, BATT), and arranged to receive and circulate the working gas, previously compressed by said compressor so that the nature of the working gas flowing through the compressor (C) is the same as the one of the working gas flowing through the turbine (T), and to release it in the environment,
- mechanical energy (E) and/or electric energy (BATT, EMC) storage means arranged to exchange energy with said turbomachine assembly (TC) and arranged to supply mechanical energy to said turbomachine assembly (TC) or supply electric energy to an electric motor of said turbomachine assembly (TC), as long as a temperature of said pollutants abatement device is under a first temperature threshold,
and in case of alternative a) in the method, the system provides a heat exchanger (H) arranged immediate upstream of the pollutants abatement device (ATS2).

8. ATS according to claim 7, wherein said compressor is arranged to receive mechanical and/or electric energy generated only from said internal combustion engine, so as to induce a higher fuel injection, when said temperature is below said first temperature threshold.

9. ATS according to claim 7 or 8, wherein said working gas coincides with said exhaust gas, and wherein the compressed exhaust gas flows within said pollutants abatement device (ATS2) and then is circulated through said turbine, so as to achieve an increased residence time of the exhaust gas flow within said pollutants abatement device.

10. ATS according to claim 9, wherein said compressor (C), said pollutants abatement device (ATS2) and said turbine (T) are arranged in this succession along an exhaust pipe (EP) conveying exhaust gas produced by said internal combustion engine, such that said compressor compresses the exhaust gas directly within said pollutants abatement device.

11. ATS according to claim 10, wherein said compressor (C) is connected mechanically with said turbine (T) and receives energy from said mechanical (E) and/or electric storage means (BATT) only when said ATS temperature is below said first temperature threshold.

12. ATS according to claim 10, wherein said compressor is connected electrically with said turbine and receives energy from said electric energy storage means (EMC) only when said ATS temperature is below said first temperature threshold and said compressor is inactive when said ATS temperature is above said second temperature threshold while said turbine produce electrical energy to be stored in said electric energy storage means (BATT) and/or mechanical energy to be transferred to a engine crankshaft, the turbine increasing the residence time of the exhaust gases crossing said pollutants abatement device.

13. ATS according to claim 9, wherein a heat exchanger (H) is operatively arranged upstream of said pollutants abatement device, so as to be crossed by said exhaust gas produced by said internal combustion engine, and wherein an inlet of said compressor (C) is connected with an outlet of said pollutants abatement device to recirculate and compress said exhaust gas within said heat exchanger (H), so as to heat up an exhaust gas flow entering into said pollutants abatement device, by means of the recirculated and compressed exhaust gas, defining said working gas.

14. ATS according to claim 9, wherein a heat exchanger (H) is operatively arranged upstream of said pollutants abatement device (ATS2), and wherein said compressor (C) is arranged to compress fresh air, defining an alternative working gas, within said heat exchanger, so as to heat up an exhaust gas flow by compressed fresh air.

15. ATS according to claim 14, further comprising valve means (V1, V2, V3, V4, V5) arranged to connect said compressor inlet so as to compress exhaust gas directly within said pollutants abatement device as long as said mechanical energy (E) and/or electric energy (BP) storage means supply energy to said turbomachine assembly and to connect said compressor inlet with the environment to suck fresh air and to compress such fresh air into said heat exchanger as long as said mechanical energy (E) and/or electric energy (BP) storage means receive energy from said turbomachine.

16. ATS according to claim 15, wherein it comprises pollutants abatement devices grouped into a first group (ATS1) and a second group (ATS2), the latter including a device needing said thermal management, wherein said first and second groups are arranged to receive exhaust gas from the internal combustion engine in succession, and wherein the ATS includes
- a first three-way valve (V1) having a first port (1) connected with the outlet of said first group (ATS1),
- said heat exchanger (H) having a first inlet (I1C) of a first circuit connected with the second port of first three-way valve (V1),
- a second three-way valve (V2) having a third port (1) connected with the third port of said first three-way valve (V1), and a second port (2) connected with the environment to suck fresh air and first port (3) connected with an inlet of the compressor (C);
- a third three-way valve (V3) having a first port (1) connected with outlet of the compressor, a second port (2) connected with an inlet (I2C) of a second circuit of the heat exchanger and a third port (3) connected with a port of a T-pipe, having another port connected with an outlet (O1C) of said first circuit of the heat exchanger (H), and a last port connected with the inlet of said second group (ATS2) ;
- a fourth 3-way valve (V4) having a first port (1) connected with the inlet of the turbine (T), a second port (2) connected with an outlet (O2C) of the second circuit of the heat exchanger and a third port (3) connected with a third port (3) of a fifth three-way valve (V5), having a first port (1) connected with the outlet of said second group (ATS2) and a second port (2) connected with the environment to release exhaust gas produced by the internal combustion engine;
wherein the turbine (T) has an outlet connected with the environment to release exhaust gas produced by the internal combustion engine during cold start or hot fresh air after light-off of said second group (ATS2).

17. Internal combustion engine, diesel or gasoline, in combination with an after treatment system (ATS) according to any one of the claims 7 to 16.

## Patentansprüche

1. Verfahren für das Wärmemanagement eines Nachbehandlungssystems (ATS) einer Brennkraftmaschine, wobei das ATS mindestens eine Schadstoffminderungsvorrichtung wie z. B. DOC, DPF, SCR, CUC, TWC enthält, das Verfahren einen vorläufigen Schritt des Prüfens, ob eine ATS-Temperatur unter einem ersten vorgegebenen Schwellenwert liegt, umfasst und das Verfahren die folgenden Schritte, die ausgeführt werden, wenn die ATS-Temperatur unter dem ersten vorgegebenen Schwellenwert liegt, umfasst:
- einen ersten Schritt des Erhitzens eines Arbeitsgases durch Kompression mittels eines Kompressors (C), wobei das Arbeitsgas durch Frischluft, die aus der Umgebung gesaugt wird, oder durch ein Abgas, das durch die Brennkraftmaschine erzeugt wird, definiert ist;
- einen zweiten Schritt des Anpassens einer Temperatur der Schadstoffminderungsvorrichtung durch das komprimierte und erhitzte Arbeitsgas, das
a) in einen Wärmetauscher (H), der unmittelbar stromaufwärts der Schadstoffminderungsvorrichtung (ATS2) angeordnet ist, oder
b) direkt in die Schadstoffminderungsvorrichtung (ATS2) strömt, wobei das Arbeitsgas ein Abgas ist;
- einen dritten Schritt des Zirkulierens des Arbeitsgases durch eine Turbine (T), um Restenergie abzuführen, derart, dass die Natur des Arbeitsgases, das durch den Kompressor (C) strömt, gleich jener des Arbeitsgases ist, das durch die Turbine (T) strömt, wodurch kein Kraftstoff in das zirkulierte Arbeitsgas eingespritzt wird; und
- einen vierten Schritt des Abgebens des Arbeitsgases in die Umgebung; wobei ein erster Energiebetrag, der im ersten Schritt verbraucht wird, größer ist als ein zweiter Energiebetrag, der mit dem dritten Schritt zurückgewonnen wird.

2. Verfahren nach Anspruch 1, wobei das Arbeitsgas mit einem Abgas übereinstimmt, das an einem Punkt stromaufwärts der Schadstoffminderungsvorrichtung entnommen wurde; und das komprimierte Abgas in der Schadstoffminderungsvorrichtung strömt und dann durch die Turbine, die stromabwärts der Schadstoffminderungsvorrichtung angeordnet ist, zirkuliert wird, um eine erhöhte Verweildauer des Abgasstroms in der Schadstoffminderungsvorrichtung zu erzielen.

3. Verfahren nach Anspruch 1, wobei das Arbeitsgas mit zurückgeführtem Abgas, das an einem Punkt stromabwärts der Schadstoffminderungsvorrichtung entnommen wurde, übereinstimmt und das zurückgeführte und komprimierte Abgas im Wärmetauscher (H) strömt, um einen Wärmeaustausch im Wärmetauscher (H) zwischen dem zurückgeführten Abgas und einem Abgasstrom zu erzielen, um zu der Temperaturanpassung zu führen.

4. Verfahren nach Anspruch 1, wobei das Arbeitsgas durch Frischluft definiert ist und die komprimierte Frischluft im Wärmetauscher (H) strömt, um einen Abgasstrom zu erhitzen, bevor Letzterer in die Schadstoffminderungsvorrichtung eintritt.

5. Verfahren nach Anspruch 4, wobei das Verfahren die folgenden Schritte umfasst, die ausgeführt werden, wenn die ATS-Temperatur (Tm) einen zweiten Temperaturschwellenwert, der größer als der erste Temperaturschwellenwert ist, überschreitet oder mit ihm übereinstimmt:
- einen fünften Schritt des Komprimierens eines Arbeitsgases mittels des Kompressors (C),
- einen sechsten Schritt des Kühlens eines Abgases, das durch die Brennkraftmaschine erzeugt wurde, bevor das Abgas die Schadstoffminderungsvorrichtung passiert, durch das komprimierte Arbeitsgas, das in den Wärmetauscher (H) strömt,
- einen siebten Schritt des Zirkulierens des Arbeitsgases durch eine Turbine (T), um Energie zurückzugewinnen, und
- einen achten Schritt des Abgebens des Arbeitsgases in die Umgebung, wobei ein erster Energiebetrag, der im fünften Schritt verbraucht wird, kleiner als ein zweiter Energiebetrag ist, der mit dem siebten Schritt zurückgewonnen wird.

6. Verfahren nach Anspruch 2, wobei das Verfahren die folgenden Schritte umfasst, die ausgeführt werden, wenn die ATS-Temperatur (Tm) einen zweiten Temperaturschwellenwert, der größer als der erste Temperaturschwellenwert ist, überschreitet oder mit ihm übereinstimmt:
- einen siebten Schritt des Zirkulierens des Arbeitsgases durch die Turbine (T), um Energie zurückzugewinnen, und
- einen achten Schritt des Abgebens des Arbeitsgases in die Umgebung, während der Kompressor inaktiv gehalten wird.

7. Nachbehandlungssystem (ATS), das dazu bestimmt ist, Abgas, das durch eine Brennkraftmaschine erzeugt wird, zu behandeln, mindestens eine Schadstoffminderungsvorrichtung wie z. B. DOC, DPF, SCR, CUC, TWC enthält und ein System zum Wärmemanagement der Schadstoffminderungsvorrichtung umfasst; wobei das System Folgendes umfasst:
- eine Steuereinheit, die konfiguriert ist, die Verfahrensschritte nach den Ansprüchen 1 bis 6 auszuführen,
- eine Strömungsmaschinenanordnung (TC), die Folgendes enthält:
• einen Kompressor (C), der ausgelegt ist, durch Kompression ein Arbeitsgas zu erhitzen und eine Temperatur der Schadstoffminderungsvorrichtung (ATS2) mittels komprimiertem Arbeitsgas zu erhöhen, wobei das Arbeitsgas durch Frischluft oder durch ein Abgas, das durch die Brennkraftmaschine erzeugt wird, definiert ist; und
• eine Turbine (T), die durch ein mechanisches Verbindungsmittel (SH) oder ein elektrisches Verbindungsmittel (EM1, EM2, INV1, INV2, BATT) mechanisch mit dem Kompressor verbunden ist bzw. elektrisch mit ihm verbindbar ist und ausgelegt ist, das Arbeitsgas, das zuvor durch den Kompressor komprimiert wurde, aufzunehmen und zu zirkulieren, derart, dass die Natur des Arbeitsgases, das durch den Kompressor (C) strömt, gleich der des Arbeitsgases ist, das durch die Turbine (T) strömt, und es in die Umgebung abzugeben, und
- ein Speichermittel (E) für mechanische Energie und/oder ein Speichermittel (BATT, EMC) für elektrische Energie, die ausgelegt sind, Energie mit der Strömungsmaschinenanordnung (TC) auszutauschen, und ausgelegt sind, der Strömungsmaschinenanordnung (TC) mechanische Energie zuzuführen oder einem Elektromotor der Strömungsmaschinenanordnung (TC) elektrische Energie zuzuführen, solange eine Temperatur der Schadstoffminderungsvorrichtung unter einem ersten Temperaturschwellenwert liegt, wobei
das System im Falle von Alternative a) im Verfahren einen Wärmetauscher (H) bereitstellt, der unmittelbar stromaufwärts der Schadstoffminderungsvorrichtung (ATS2) angeordnet ist.

8. ATS nach Anspruch 7, wobei der Kompressor ausgelegt ist, mechanische und/oder elektrische Energie, die lediglich von der Brennkraftmaschine erzeugt wird, aufzunehmen, um ein stärkeres Kraftstoffeinspritzen zu veranlassen, wenn die Temperatur unter dem ersten Temperaturschwellenwert liegt.

9. ATS nach einem der Ansprüche 7 oder 8, wobei das Arbeitsgas mit dem Abgas übereinstimmt und das komprimierte Abgas in die Schadstoffminderungsvorrichtung (ATS2) strömt und dann durch die Turbine zirkuliert wird, um eine erhöhte Verweildauer des Abgasstroms in der Schadstoffminderungsvorrichtung zu erzielen.

10. ATS nach Anspruch 9, wobei der Kompressor (C), die Schadstoffminderungsvorrichtung (ATS2) und die Turbine (T) in dieser Abfolge entlang einer Auslassleitung (EP), die Abgas, das durch die Brennkraftmaschine erzeugt wird, übermittelt, angeordnet sind, derart, dass der Kompressor das Abgas direkt in der Schadstoffminderungsvorrichtung komprimiert.

11. ATS nach Anspruch 10, wobei der Kompressor (C) mit der Turbine (T) mechanisch verbunden ist und Energie von dem mechanischen Speichermittel (E) und/oder dem elektrischen Speichermittel (BATT) lediglich dann aufnimmt, wenn die ATS-Temperatur unter dem ersten Temperaturschwellenwert liegt.

12. ATS nach Anspruch 10, wobei der Kompressor mit der Turbine elektrisch verbunden ist und Energie vom elektrischen Energiespeichermittel (EMC) lediglich dann aufnimmt, wenn die ATS-Temperatur unter dem ersten Temperaturschwellenwert liegt, und der Kompressor inaktiv ist, wenn die ATS-Temperatur über dem zweiten Temperaturschwellenwert liegt, während die Turbine elektrische Energie, die im elektrischen Energiespeichermittel (BATT) gespeichert werden soll, und/oder mechanische Energie, die zu einer Kraftmaschinenkurbelwelle übertragen werden soll, erzeugt, wobei die Turbine die Verweildauer der Abgase, die die Schadstoffminderungsvorrichtung passieren, erhöht.

13. ATS nach Anspruch 9, wobei ein Wärmetauscher (H) stromaufwärts der Schadstoffminderungsvorrichtung wirkend ausgelegt ist, um durch das Abgas, das durch die Brennkraftmaschine erzeugt wird, passiert zu werden, und ein Einlass des Kompressors (C) mit einem Auslass der Schadstoffminderungsvorrichtung verbunden ist, um das Abgas im Wärmetauscher (H) zurückzuführen und zu verdichten, um einen Abgasstrom, der in die Schadstoffminderungsvorrichtung eintritt, mittels des zurückgeführten und komprimierten Abgases, das das Arbeitsgas definiert, zu erhitzen.

14. ATS nach Anspruch 9, wobei ein Wärmetauscher (H) stromaufwärts der Schadstoffminderungsvorrichtung (ATS2) wirkend ausgelegt ist und
der Kompressor (C) ausgelegt ist, Frischluft, die ein alternatives Arbeitsgas definiert, im Wärmetauscher zu komprimieren, um einen Abgasstrom durch komprimierte Frischluft zu erhitzen.

15. ATS nach Anspruch 14, das ferner ein Ventilmittel (V1, V2, V3, V4, V5) umfasst, das ausgelegt ist, den Kompressoreinlass zu verbinden, um Abgas direkt in der Schadstoffminderungsvorrichtung zu verdichten, solange das Speichermittel (E) für mechanische Energie und/oder das Speichermittel (BP) für elektrische Energie der Strömungsmaschinenanordnung Energie zuführen, und den Kompressoreinlass mit der Umgebung zu verbinden, um Frischluft anzusaugen und derartige Frischluft in den Wärmetauscher zu komprimieren, solange das Speichermittel (E) für mechanische Energie und/oder das Speichermittel (BP) für elektrische Energie von der Strömungsmaschine Energie aufnehmen.

16. ATS nach Anspruch 15, wobei es Schadstoffminderungsvorrichtungen umfasst, die in eine erste Gruppe (ATS 1) und eine zweite Gruppe (ATS2) gruppiert sind, wobei letztere eine Vorrichtung enthält, die das Wärmemanagement benötigt, die erste und die zweite Gruppe ausgelegt sind, Abgas von der Brennkraftmaschine nacheinander aufzunehmen, und das ATS Folgendes enthält:
- ein erstes Dreiwegeventil (V1), das einen ersten Anschluss (1) besitzt, der mit dem Auslass der ersten Gruppe (ATS1) verbunden ist, wobei
- der Wärmetauscher (H) einen ersten Einlass (I1C) eines ersten Kreises, der mit dem zweiten Anschluss des ersten Dreiwegeventils (V1) verbunden ist, besitzt,
- ein zweites Dreiwegeventil (V2), das einen dritten Anschluss (1), der mit dem dritten Anschluss des ersten Dreiwegeventils (V1) verbunden ist, einen zweiten Anschluss (2), der mit der Umgebung verbunden ist, um Frischluft anzusaugen, und einen ersten Anschluss (3), der mit einem Einlass des Kompressors (C) verbunden ist, besitzt;
- ein drittes Dreiwegeventil (V3), das Folgendes besitzt: einen ersten Anschluss (1), der mit einem Auslass des Kompressors verbunden ist, einen zweiten Anschluss (2), der mit einem Einlass (I2C) eines zweiten Kreises des Wärmetauschers verbunden ist, und einen dritten Anschluss (3), der mit einem Anschluss eines T-Rohrs, das einen weiteren Anschluss, der mit einem Auslass (O1C) des ersten Kreises des Wärmetauschers (H) verbunden ist, und einen letzten Anschluss, der mit dem Einlass der zweiten Gruppe (ATS2) verbunden ist, besitzt, verbunden ist; und
- ein viertes Dreiwegeventil (V4), das Folgendes besitzt: einen ersten Anschluss (1), der mit dem Einlass der Turbine (T) verbunden ist, einen zweiten Anschluss (2), der mit einem Auslass (O2C) der zweiten Schaltung des Wärmetauschers verbunden ist, und einen dritten Anschluss (3), der mit einem dritten Anschluss (3) eines fünften Dreiwegeventils (V5), das einen ersten Anschluss (1), der mit dem Auslass der zweiten Gruppe (ATS2) verbunden ist, und einen zweiten Anschluss (2), der mit der Umgebung verbunden ist, um Abgas, das durch die Brennkraftmaschine erzeugt wird, abzugeben, besitzt, verbunden ist; wobei
die Turbine (T) einen Auslass besitzt, der mit der Umgebung verbunden ist, um Abgas, das durch die Brennkraftmaschine während eines Kaltstarts erzeugt wird, oder heiße Frischluft nach einem Anspringen der zweiten Gruppe (ATS2) abzugeben.

17. Brennkraftmaschine für Diesel oder Benzin in Kombination mit einem Nachbehandlungssystem (ATS) nach einem der Ansprüche 7 bis 16.

## Revendications

1. Procédé de gestion thermique d'un système de post-traitement (ATS) d'un moteur à combustion interne, l'ATS comprenant au moins un dispositif de réduction de polluants, tel que DOC, DPF, SCR, CUC, TWC, le procédé comprenant une étape préliminaire pour vérifier si une température d'ATS est inférieure à un premier seuil prédéterminé, le procédé comprenant les étapes suivantes, qui sont réalisées si la température d'ATS est inférieure au premier seuil prédéterminé :
une première étape de chauffage d'un gaz de travail par compression, au moyen d'un compresseur (C), le gaz de travail étant défini par de l'air frais aspiré depuis l'environnement ou par un gaz d'échappement produit par le moteur à combustion interne ;
une deuxième étape d'ajustement d'une température dudit dispositif de réduction de polluants par le gaz de travail comprimé et chauffé s'écoulant :
a) dans un échangeur de chaleur (H) agencé immédiatement en amont du dispositif de réduction de polluants (ATS2), ou bien
b) directement dans le dispositif de réduction de polluants (ATS2),
dans lequel le gaz de travail est le gaz d'échappement ;
une troisième étape de mise en circulation dudit gaz de travail dans une turbine (T) pour évacuer l'énergie résiduelle, de sorte que la nature du gaz de travail s'écoulant dans le compresseur (C) est la même que celle du gaz de travail s'écoulant dans la turbine (T), ainsi aucun combustible n'est injecté dans le gaz de travail circulé ;
une quatrième étape de libération dudit gaz de travail dans l'environnement ;
dans lequel une première quantité d'énergie consommée lors de ladite première étape est supérieure à une seconde quantité d'énergie récupérée avec ladite troisième étape.

2. Procédé selon la revendication 1, dans lequel ledit gaz de travail coïncide avec le gaz d'échappement, aspiré à un point en amont dudit dispositif de réduction de polluants ; dans lequel le gaz d'échappement comprimé s'écoule dans le dispositif de réduction de polluants et est ensuite circulé à travers ladite turbine, qui est agencée en aval dudit dispositif de réduction de polluants, afin d'obtenir un temps de résidence accru de l'écoulement de gaz d'échappement dans ledit dispositif de réduction de polluants.

3. Procédé selon la revendication 1, dans lequel ledit gaz de travail coïncide avec le gaz d'échappement recirculé, aspiré à un point en aval dudit dispositif de réduction de polluants, et dans lequel le gaz d'échappement recirculé et comprimé s'écoule dans ledit échangeur de chaleur (H), afin d'atteindre un échange thermique dans ledit échangeur de chaleur (H) entre ledit gaz d'échappement recirculé et un écoulement de gaz d'échappement pour conduire audit ajustement de température.

4. Procédé selon la revendication 1, dans lequel ledit gaz de travail est défini par de l'air frais ; dans lequel l'air frais comprimé s'écoule à l'intérieur dudit échangeur de chaleur (H) afin de chauffer un écoulement de gaz d'échappement avant que ce dernier n'entre dans ledit dispositif de réduction de polluants.

5. Procédé selon la revendication 4, dans lequel le procédé comprend les étapes suivantes, qui sont réalisées lorsque ladite température d'ATS (Tm) dépasse un second seuil de température, supérieur ou égal audit premier seuil de température ;
une cinquième étape de compression d'un gaz de travail au moyen dudit compresseur (C),
une sixième étape de refroidissement du gaz d'échappement généré par ledit moteur à combustion interne avant que le gaz d'échappement ne traverse ledit dispositif de réduction de polluants par ledit gaz de travail comprimé qui s'écoule dans ledit échangeur de chaleur (H),
une septième étape de mise en circulation dudit gaz de travail à travers une turbine (T) afin de récupérer l'énergie,
une huitième étape de libération duti gaz de travail dans l'environnement,
dans lequel une première quantité d'énergie consommée dans ladite cinquième étape est inférieure à une seconde quantité d'énergie récupérée avec ladite septième étape.

6. Procédé selon la revendication 2, dans lequel le procédé comprend les étapes suivantes, réalisées lorsque ladite température d'ATS (Tm) dépasse un second seuil de température, supérieur ou égal audit premier seuil de température :
une septième étape de mise en circulation dudit gaz de travail à travers ladite turbine (T) afin de récupérer l'énergie,
une huitième étape de libération dudit gaz de travail dans l'environnement,
alors que ledit compresseur est maintenu inactif.

7. Système de post-traitement (ATS) prévu pour traiter un gaz d'échappement produit par un moteur à combustion interne et comprenant au moins un dispositif de réduction de polluants, tel que DOC, DPF, SCR, CUC, TWC et comprenant un système pour la gestion thermique du dispositif de réduction de polluants ; le système comprenant :
une unité de commande configurée pour réaliser les étapes de procédé selon les revendications 1 à 6,
un ensemble de turbomachine (TC) comprenant :
un compresseur (C) agencé pour chauffer par compression un gaz de travail et pour augmenter une température dudit dispositif de réduction de polluants (ATS2) au moyen du gaz de travail comprimé, le gaz de travail étant défini par l'air frais ou par un gaz d'échappement produit par le moteur à combustion interne ;
une turbine (T) mécaniquement raccordée ou pouvant être raccordée électriquement audit compresseur, respectivement par un moyen de raccordement mécanique (SH) ou un moyen de raccordement électrique (EM1, EM2, INV1, INV2, BATT) et agencée pour recevoir et faire circuler le gaz de travail, préalablement comprimé par ledit compresseur, de sorte que la nature du gaz de travail s'écoulant à travers le compresseur (C) est la même que celle du gaz de travail s'écoulant à travers la turbine (T) et pour le libérer dans l'environnement,
un moyen de stockage d'énergie mécanique (E) et/ou d'énergie électrique (BATT, EMC) agencé pour échanger l'énergie avec ledit ensemble de turbomachine (TC) et agencé pour fournir l'énergie mécanique audit ensemble de turbomachine (TC) ou fournir l'énergie électrique à un moteur électrique dudit ensemble de turbomachine (TC), tant qu'une température dudit dispositif de réduction de polluants est inférieure à un premier seuil de température, et dans un cas en variante a) dans le procédé, le système fournit un échangeur de chaleur (H) agencé immédiatement en amont du dispositif de réduction de polluants (ATS2).

8. ATS selon la revendication 7, dans lequel ledit compresseur est agencé pour recevoir l'énergie mécanique et/ou électrique générée uniquement à partir dudit moteur à combustion interne, afin d'induire une injection de combustible supérieure, lorsque ladite température est inférieure audit premier seuil de température.

9. ATS selon la revendication 7 ou 8, dans lequel ledit gaz de travail coïncide avec ledit gaz d'échappement, et dans lequel le gaz d'échappement comprimé s'écoule dans ledit dispositif de réduction de polluants (ATS2), et est ensuite circulé à travers ladite turbine, afin d'obtenir un temps de résidence accru de l'écoulement de gaz d'échappement à l'intérieur dudit dispositif de réduction de polluants.

10. ATS selon la revendication 9, dans lequel ledit compresseur (C), ledit dispositif de réduction de polluants (ATS2) et ladite turbine (T) sont agencés dans cette succession le long d'un tuyau d'échappement (EP) transportant le gaz d'échappement produit par ledit moteur à combustion interne, de sorte que ledit compresseur comprime le gaz d'échappement directement à l'intérieur dudit dispositif de réduction de polluants.

11. ATS selon la revendication 10, dans lequel ledit compresseur (C) est raccordé mécaniquement avec ladite turbine (T) et reçoit l'énergie dudit moyen de stockage mécanique (E) et/ou électrique (BATT) uniquement lorsque ladite température d'ATS est inférieure audit premier seuil de température.

12. ATS selon la revendication 10, dans lequel ledit compresseur est raccordé électriquement avec ladite turbine et reçoit l'énergie dudit moyen de stockage d'énergie électrique (EMC) uniquement lorsque ladite température d'ATS est inférieure audit premier seuil de température et ledit compresseur est inactif lorsque ladite température d'ATS est supérieure audit second seuil de température alors que ladite turbine produit l'énergie électrique à stocker dans ledit moyen de stockage d'énergie électrique (BATT) et/ou l'énergie mécanique à transférer à un vilebrequin de moteur, la turbine augmentant le temps de résidence des gaz d'échappement traversant ledit dispositif de réduction de polluants.

13. ATS selon la revendication 9, dans lequel un échangeur de chaleur (H) est agencé, de manière opérationnelle, en amont dudit dispositif de réduction de polluants, afin d'être traversé par ledit gaz d'échappement produit par ledit moteur à combustion interne, et dans lequel une entrée dudit compresseur (C) est raccordée à une sortie dudit dispositif de réduction de polluants pour recirculer et comprimer ledit gaz d'échappement à l'intérieur dudit échangeur de chaleur (H), afin de chauffer un écoulement de gaz d'échappement entrant dans ledit dispositif de réduction de polluants, au moyen du gaz d'échappement recirculé et comprimé, définissant ledit gaz de travail.

14. ATS selon la revendication 9, dans lequel un échangeur de chaleur (H) est agencé, de manière opérationnelle, en amont dudit dispositif de réduction de polluants (ATS2), et dans lequel ledit compresseur (C) est agencé pour comprimer l'air frais, définissant un gaz de travail alternatif, à l'intérieur dudit échangeur de chaleur, afin de chauffer un écoulement de gaz d'échappement par l'air frais comprimé.

15. ATS selon la revendication 14, comprenant en outre un moyen de valve (V1, V2, V3, V4, V5) agencé pour raccorder ladite entrée de compresseur afin de comprimer le gaz d'échappement directement à l'intérieur dudit dispositif de réduction de polluants tant que les moyens de stockage d'énergie mécanique (E) et/ou d'énergie électrique (BP) fournissent l'énergie audit ensemble de turbomachine et afin de raccorder ladite entrée de compresseur avec l'environnement pour aspirer l'air frais et pour comprimer un tel air frais dans ledit échangeur de chaleur tant que lesdits moyens de stockage d'énergie mécanique (E) et/ou d'énergie électrique (BP) reçoivent l'énergie de ladite turbomachine.

16. ATS selon la revendication 15, dans lequel il comprend des dispositifs de réduction de polluants groupés dans un premier groupe (ATS1) et dans un second groupe (ATS2), ce dernier comprenant un dispositif nécessitant ladite gestion thermique, dans lequel lesdits premier et second groupes sont agencés pour recevoir le gaz d'échappement du moteur à combustion interne en succession, et dans lequel l'ATS comprend :
une première valve à trois voies (V1) ayant un premier orifice (1) raccordé à la sortie dudit premier groupe (ATS1),
ledit échangeur de chaleur (H) ayant une première entrée (I1C) d'un premier circuit raccordé avec le second orifice de la première valve à trois voies (V1),
une deuxième valve à trois voies (V2) ayant un troisième orifice (1) raccordé avec le troisième orifice de ladite première valve à trois voies (V1), et un deuxième orifice (2) raccordé avec l'environnement pour aspirer l'air frais et le premier orifice (3) raccordé avec une entrée du compresseur (C) ;
une troisième valve à trois voies (V3) ayant un premier orifice (1) raccordé avec la sortie du compresseur, un deuxième orifice (2) raccordé avec une entrée (I2C) d'un second circuit de l'échangeur de chaleur et un troisième orifice (3) raccordé avec un orifice d'un tuyau en T, ayant un autre orifice raccordé avec une sortie (O1C) dudit premier circuit du l'échangeur de chaleur (H), et un dernier orifice raccordé avec l'entrée dudit second groupe (ATS2) ;
une quatrième valve à trois voies (V4) ayant un premier orifice (1) raccordé avec l'entrée de la turbine (T), un deuxième orifice (2) raccordé avec une sortie (O2C) du second circuit de l'échangeur de chaleur et un troisième orifice (3) raccordé avec un troisième orifice (3) d'une cinquième valve à trois voies (V5), ayant un premier orifice (1) raccordé avec la sortie dudit second groupe (ATS2) et un deuxième orifice (2) raccordé avec l'environnement pour libérer le gaz d'échappement produit par le moteur à combustion interne ;
dans lequel :
la turbine (T) a une sortie raccordée avec l'environnement pour libérer le gaz d'échappement produit par le moteur à combustion interne pendant le démarrage à froid ou l'air frais chaud après l'allumage dudit second groupe (ATS2).

17. Moteur à combustion interne, diesel ou essence, en combinaison avec un système de post-traitement (ATS) selon l'une quelconque des revendications 7 à 16.
